# EUROPÄISCHE PATENTSCHRIFT

(11) **EP 2 446 491 B1**
(45) Veröffentlichungstag und Bekanntmachung des Hinweises auf die Patenterteilung: **26.02.2014**
(21) Anmeldenummer: 10730179.8
(22) Anmeldetag: 08.07.2010
(51) Int. Cl.: H01L 41/113

(54) **VORRICHTUNG UND VERFAHREN ZUR ERHÖHUNG EINER AUSGANGSSPANNUNG EINES ENERGIEGENERATORS**
DEVICE AND METHOD FOR INCREASING THE OUTPUT VOLTAGE OF AN ENERGY GENERATOR
DISPOSITIF ET PROCÉDÉ PERMETTANT D'AUGMENTER UNE TENSION DE SORTIE D'UN GÉNÉRATEUR D'ÉNERGIE

(30) Priorität: 09.07.2009 DE 102009032422
(43) Veröffentlichungstag der Anmeldung: 02.05.2012
(73) Patentinhaber: Hahn-Schickard-Gesellschaft für angewandte Forschung e.V., 78052 Villingen-Schwenningen (DE)
(72) Erfinder: BECKER, Philipp, 78050 Villingen-Schwenningen (DE); FOLKMER, Bernd, 78462 Konstanz (DE)
(74) Vertreter: Stöckeler, Ferdinand
(86) Internationale Anmeldenummer: PCT/EP2010/059838
(87) Internationale Veröffentlichungsnummer: WO 2011/003985

(56) Entgegenhaltungen:
- FR-A1- 2 853 160
- US-B1- 6 522 048

## Beschreibung

Ausführungsbeispiele gemäß der Erfindung beziehen sich auf Energiegeneratoren und im Besonderen auf eine Vorrichtung und ein Verfahren zur Erhöhung einer Ausgangsspannung eines Energiegenerators.

Energy Harvesting (Energieerzeugung, Energiewandlung) ist ein Thema, dessen Wichtigkeit und Bedeutung erkannt ist. Dies kann aus den vielfältigen und umfassenden weltweiten F&E-Aktivitäten (Forschung und Entwicklung) auf diesem Gebiet abgelesen werden (siehe z.B. "D. P. Arnold: Review of Microscale Magnetic Power Generation; IEEE Transactions on Magnetics, vol. 43, no. 11, November 2007, pp. 3940-3949", "J. M. Donelan, V. Naing, Q. Li: Biomechanical Energy Harvesting; Proceedings of PowerMEMS 2008+ microEMS 2008, Sendai, Japan, November 9-12, (2008), pp. 39-44", "S. Roundy: Energy Harvesting for Tire Pressure monitoring Systems: Design Considerations; Proceedings of PowerMEMS 2008+ microEMS 2008, Sendai, Japan, November 9-12, (2008), pp. 1-6" und "Y. Naruse, N. Matsubara, K. Mabuchi, M. Izumi, K. Honma: Electrostatic Micro Power Generator From Low Frequency Vibration Such As Human Motion; Proceedings of PowerMEMS 2008+ microEMS 2008, Sendai, Japan, November 9-12, (2008), pp.19-22".

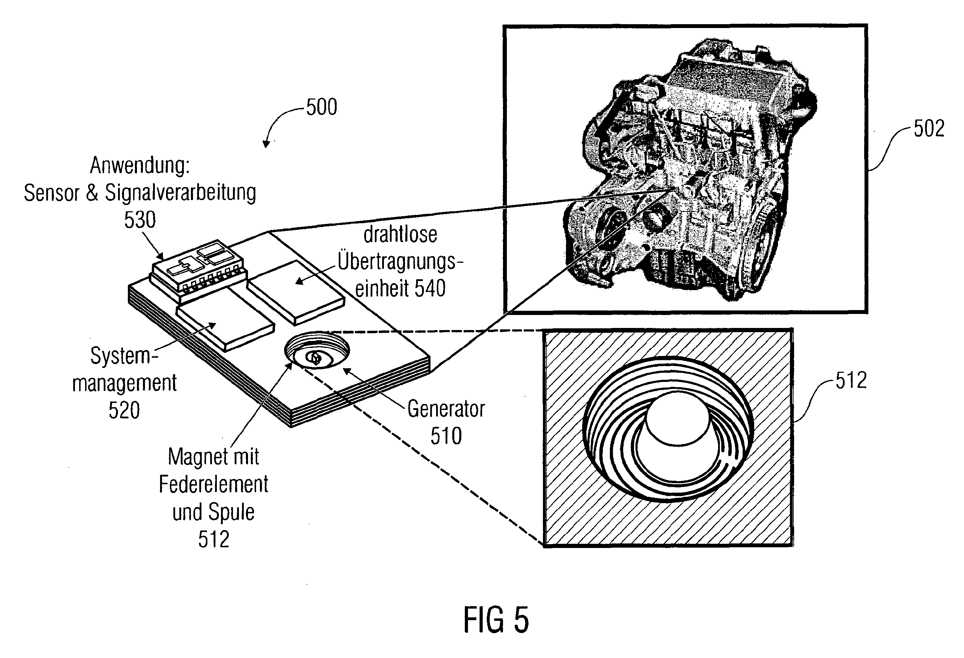

Beispielsweise zeigt Fig. 5 eine schematische Darstellung eines energieautarken Zustandsüberwachungssystems 500 (Condition Monitoring). Das System besteht aus dem Vibrationswandler 510 (Energy-Harvester, Energiegenerator), einem Systemmanagement 520 zur Energiespeicherung und -verarbeitung, einer Sensorik 530 mit Signalverarbeitung und einer Einheit zur drahtlosen Datenübertragung 540. Der Vibrationswandler 510 ist beispielsweise ein induktiver Energiegenerator mit einem Magnet mit Federelement und Spule 512. Das energieautarke Zustandsüberwachungssystem 500 kann beispielsweise in einem Motor 502 eingebaut werden.

Jedoch ist die Anwendungsbreite entsprechender Sensoren und Systeme bis heute stark eingeschränkt. Das liegt insbesondere daran, dass die gewonnene und verfügbare Energie nicht ausreicht, um die meist komplexen elektronischen Schaltungen, die zur Aufbereitung und Auswertung des Informationsgehaltes der Sensorsignale nötig sind, autark mit Betriebsenergie zu versorgen. Dies gilt insbesondere für den Betrieb von Funkmodulen.

Verantwortlich für diese meist unbefriedigende und inakzeptable Situation ist neben der Wandlereffizienz selbst, vor allem die Energiespeicherung. Diese bildet den Puffer zwischen dem Generator vor Ort, der seine Energie meist diskontinuierlich anliefert, und dem Speichermodul, das aus dem Generator gespeist wird und die elektronischen Schaltungen mit Betriebsspannung versorgt.

In der Regel geht ein mehr oder weniger großer Energieanteil, der gar nicht gespeichert werden kann, ungenutzt verloren. In Zahlen: Untersuchungen mit am Mark verfügbaren Bauteilen haben gezeigt, dass ein Harvester entsprechend dem heutigen Entwicklungsstand einen maximalen Wirkungsgrad von 40% besitzt, wenn sich der Wirkungsgrad als das Verhältnis der gespeicherten Energie zu der angelieferten Energie versteht.

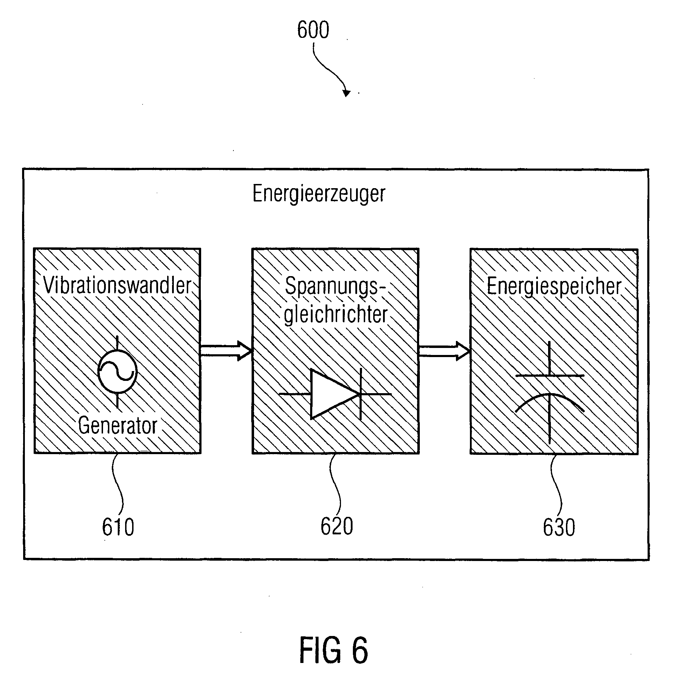

Ein typischer Energy Harvester 600 (auch Energiegenerator oder Energiewandler genannt), der den Stand der Technik repräsentiert, ist in der Regel dreistufig gemäß der schematischen Darstellung in Fig. 6 ausgeführt (siehe z.B. "D. Maurath, C.Peters, T.Hehn, P. Becker, D. Mintenbeck, Y. Manoli: Low Power Elektronik für autonome Systeme; Proc. Energieautarke Sensorik - 5. GMM-Workshop 2008, Nov. 12-13, Düsseldorf, 2008" und "Y. Manoli: The Mixed-Signal Challenge: Low-Power Autonomous Microsystems (invited) 3. VDI GMM Workshop Energieautarke Systeme, Kassel, 2004"). Er besteht in der ersten Stufe aus dem eigentlichen Energiegenerator 610, der gemäß dem zugrunde liegenden physikalischen Wirkprinzip gestaltet ist. Im vorliegenden Fall des Vibrationswandlers wird die Bewegungsdynamik eines Bauteils genutzt, auf den der Wandler aufgesetzt wird. Bauteil samt dem Wandler werden dem Rhythmus einer speziellen Betriebsbelastung ausgesetzt. In der zweiten Stufe ist der Gleichrichter 620 anzutreffen, der die Wechselspannung des Generators in eine modulierte Gleichspannung umsetzt, die in der dritten Stufe einen Kondensator bzw. eine Batterie auflädt. Letztere fungieren als Energiespeicher 630.

In anderen Worten, in Fig. 6 ist eine Standard-Ladeschaltung für Vibrationsgeneratoren, bestehend aus dem Vibrationswandler 610 oder Energiegenerator, einem Spannungsgleichrichter 620 und einem Energiespeicher 630 (Kondensator) gezeigt.

Das Hauptproblem besteht darin, dass die vom Generator angelieferte Energie erst dann gespeichert werden kann, wenn die entsprechende Generatorspannung die am Speichermedium anliegende Spannung übersteigt. Letztere ist diejenige, die sich im bisherigen Verlauf der Aufladung am Speichermedium bereits ausgebildet hat. Das heißt, mit fortschreitender Ladung des Speichers wird ein immer geringerer Anteil der Generatorenergie genutzt. Die Ladungszunahme erfolgt zunehmend langsamer. Der Gesamtwirkungsgrad nimmt ab.

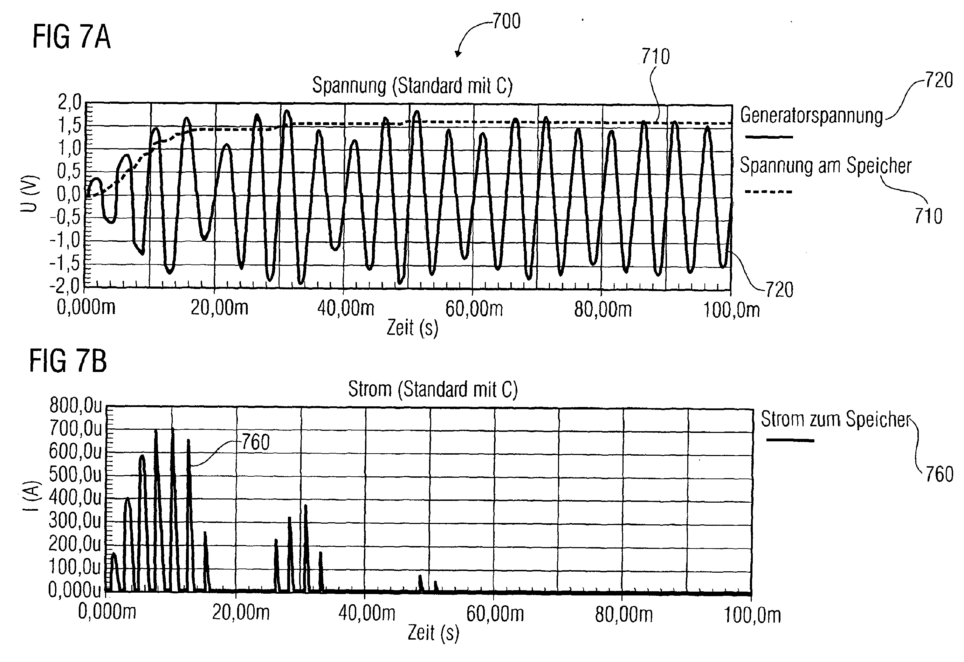

In Fig. 7a sind typische Verläufe 700 der vom Generator erzeugten Spannung 720 und der am Energiespeicher anliegenden Spannung 710 dargestellt. Fig. 7b zeigt den Stromfluss 760 vom Generator zum Energiespeicher. Sobald die Speicherspannung 710 die Höhe der Generatorspannung 720 erreicht, wird sehr wenig Energie umgesetzt.

Fig. 7a zeigt zu einem gegebenen Zeitpunkt die Generatorspannung 720 und das aktuelle Spannungsniveau 710 des Speichers. Nur die Spitzen der Generatorspannung oberhalb der Linie 720 tragen zur Ladung bei. Fig. 7b zeigt den Stromfluss 760 vom Generator zum Energiespeicher. Der Anteil ungenutzter Energie des Generators wächst mit zunehmendem Ladungsniveau des Energiespeichers. Die Annäherung an einen angestrebten Sättigungszustand des Speichers erfolgt langsamer, als es von der verfügbaren Energie her möglich wäre. Damit ist offenbar, dass bezüglich der Verfahrenstechnik des Energiewandlers zwingend Maßnahmen zur Steigerung des Wirkungsgrades ergriffen werden müssen. Vor Allem induktive Generatoren liefern eine eher kleinere Spannung, obwohl der Strom relativ hoch sein kann.

Das Defizit der Verfahrenstechnik bezüglich seiner eingeschränkten Energie-SpeicherKapazität schlägt sich 1:1 in der Anwendungsbreite der darauf basierenden Produkte nieder, so dass eine Vielzahl von interessanten, wichtigen und lohnenden Anwendungen aus Mangel an Betriebsenergie nicht realisiert werden kann.

Um die Effizienz des Energy Harvesters insgesamt zu steigern, besteht grundsätzlich auch bei den spezifischen Parametern der Energiegeneratoren Optimierungsbedarf. Auf diesem Gebiet wurden in jüngster Zeit markante Fortschritte erzielt. Hier sind softwaregestützte Verfahrensmodellierung und -simulation besonders effizient.

Einfache diskrete Schottky- oder Silizium-pn-Dioden werden in der Praxis zwar noch häufig für die Gleichrichtung verwendet, stellen aber nicht mehr den Stand Forschung dar. Ebenso wenig CMOS integrierte Gleichrichter basierend auf MOS Dioden. Mit dem Konzept der CMOS integrierten, aktiven Gleichrichtern kann das Hauptproblem von passiven Lösungen (der hohe Spannungsabfall) überwunden werden (siehe z.B. "H. Raisigel, J.-C. Crebier, Y. Lembeye, J. Delamare, and O. Cugat, Autonomous, low voltage, high efficiency, CMOS recti-fier for three-phase micro generator, in Proceedings of the International Confer-ence on Solid-State Sensors and Actuators, Transducers 2007, 2007, pp. 883-886" und "E. Dallago, D. Miatton, G. Venchi, G. Frattini, and G. Ricotti, Self-supplied integrated active high-efficient AC-DC converter for piezoelectric energy scavenging systems, in Proceedings of the IEEE International Symposium on Circuits and Systems, ISCAS, 2007, pp. 1633-1636"). Besonders bei den typischerweise geringen Ausgangsspannungen am Generator ist der Spannungsabfall von ca. 250 mV pro Schottky-Diode nicht zu vernachlässigen. In "C. Peters, D. Spreemann, M. Ortmanns and Y. Manoli, A CMOS integrated voltage and power efficient AC/DC converter for energy harvesting applications, J. Micromech. Microeng, Vol. 18, No. 10, 104005 (9pp), 2008" wurde ein aktiver Gleichrichter und eine Schottky-Diode an einem induktiven Energy Harvester (1 cm³) betrieben. Die aktive Diode erreicht 37% mehr Ausgangsleistung als die Schottky-Diode. Die Ausgangsleistung stieg von 112 µW auf 154 µW wobei der aktive Gleichrichter ca. 1,2 µW verbrauchte. Dies zeigt beispielsweise das große Potential von CMOS integrierten Interface Schaltungen für Energy Harvester.

Zusammengefasst, bei der Realisierung eines Energiewandler, der im oben genannten Sinn aus Umgebungsenergie elektrische Energie erzeugt und diese in einem Speichermedium ablegt, treten in der Regel einige Schwierigkeiten auf, die den Wirkungsgrad des Wandlers verschlechtern.

Weitere Beispiele für energieautarke Systeme und zusätzliche Informationen dazu sind beispielsweise in oder unter "B. Folkmer: Entwicklung innovativer Energie-Generatoren am HSG-IMIT zur Nutzung von Maschinenschwingungen, VDC TZ, 2007, St. Georgen, Germany", "D. Hoffmann: Design Considerations of Electrostatic Elements For In-Plane Micro-Generators, PowerMEMS, 2007, Freiburg, Germany, pp. 133-136", "D. Maurath, M. Ort-manns and Y. Manoli, High Efficiency, Low-Voltage and Self-Adjusting Charge Pump with Enhanced Impedance Matching, Proc. of IEEE Mid-west Symposium on Circuits and Systems (MWSCAS), 2008, pp: 189-192", "D. Spreemann, P. Becker: Energieautarke Sensorik im Kraftfahrzeug gespeist aus einem elektromagnetischen Vibrationswandler 4, Internationales Forum Mechatronik 2008, Sept. 22-23, Stuttgart, 2008", "EnOcean-Funktechnik: Batterielose Funkmodule mit Energy Harvesting; Elektronikpraxis . - Würzburg : Vogel, ISSN 0341-5589, ZDB-ID 2162234, 2008", "Mykola Pereyma: Overview of the Modern State of the Vibration Energy Harvesting Devices; MEMSTECH'2007, May 23-26, 2007, pp.107-112", "N. Lotze, M. Ortmanns and Y. Manoli, A Study on Self-Timed Asynchronous Subthreshold Logic, Proc. IEEE International Conference on Computer Design, IEEE Computer Society, 2007, pp" und "X-Fab, Mixed-Signal foundry, Erfurt, Deutschland, http://www.xfab.com/en/technology/cmos.html" zu finden.

Ein Ansatz zur Verstärkung der vom Generator gelieferten Spannung und Verlängerung der Ladephasen beruht auf einem SSHI-Verfahren (Synchronized Switching Harvesting with an Inductor, synchronisiert schaltendes Energiewandeln mit einer Induktivität) oder einem SSHC-Verfahren (Synchronized Switching Harvesting with a Capacitor, synchronisiert schaltendes Energiewandeln mit einer Kapazität).

Beide Verfahren sind in ihrer Grundform in der Literatur zwar grundsätzlich beschrieben (sieh z.B. "E. Lefeuvre, A. Badel, A. Benayad, L. Lebrun, C. Richard, D. Guyomar: A comparison between several approaches of piezoelectric energy harvesting, J.Phys. IV France 128 (2005), pp. 177-186", "Y C Shu, I C Lien, W. J.Wu: An improved analysis of the SSHI interface in piezoelectric energy harvesting, Smart Mater. Struct. 16 (2007) pp. 2253-2264" und "Y C Shu, I C Lien: A Comparison between the Standard and SSHI Interfaces used in Piezoelectric Power Harvesting; Proceedings of the SPIE (2007), Volume 6525, pp. 652509.1-652509.10"), es fehlt jedoch jegliche schaltungstechnische Realisierung, die, wie im Folgenden gezeigt wird, beträchtliche Probleme aufwirft.

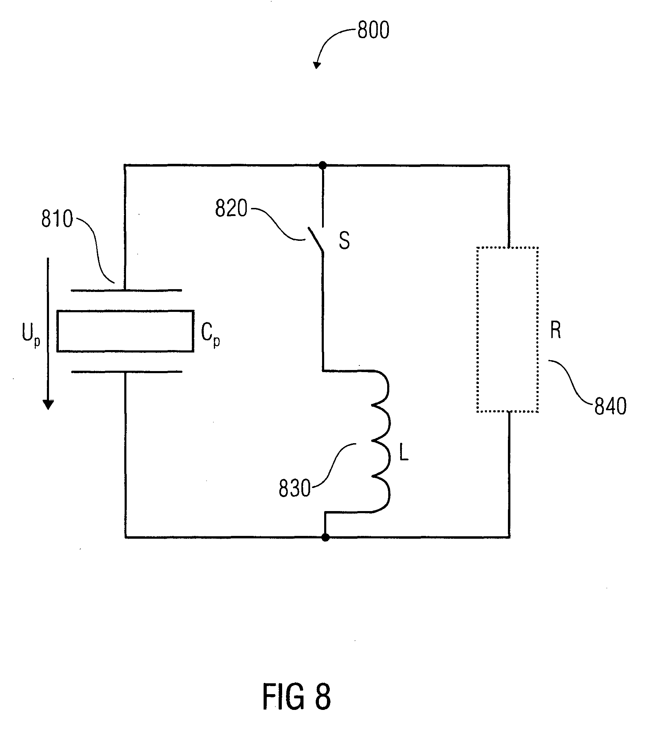

SSHI bzw. SSHC bezieht sich auf den Fall des piezoelektrischen bzw. des induktiven Generators. Das Prinzip soll anhand des SSHI-Verfahrens erklärt werden. Dem piezoelektrischen Generator, der stark vereinfacht einen Kondensator darstellt, wird über einen Schalter zyklisch eine Spule (engl. inductor, deshalb der Name SSHI) parallel geschaltet. Es entsteht ein Schwingkreis aus Spule und Kondensator. Die Zuschaltung der Spule erfolgt kurzzeitig im Maximum der am Piezo-Element anliegenden Piezo-Spannung. Ein stark vereinfachtes Modell ist in Fig. 8 dargestellt. Spule und Kapazität sind so dimensioniert, dass die Resonanzfrequenz des elektrischen Schwingkreises wesentlich höher als die Frequenz der mechanischen Schwingung liegt.

Fig. 8 zeigt das stark vereinfachte Modell 800 der SSHI-Schaltung, bestehend aus einem piezo-elektrischen Energiegenerator 810, einem Schalter 820, einer Spule 830 und einem Lastwiderstand 840.

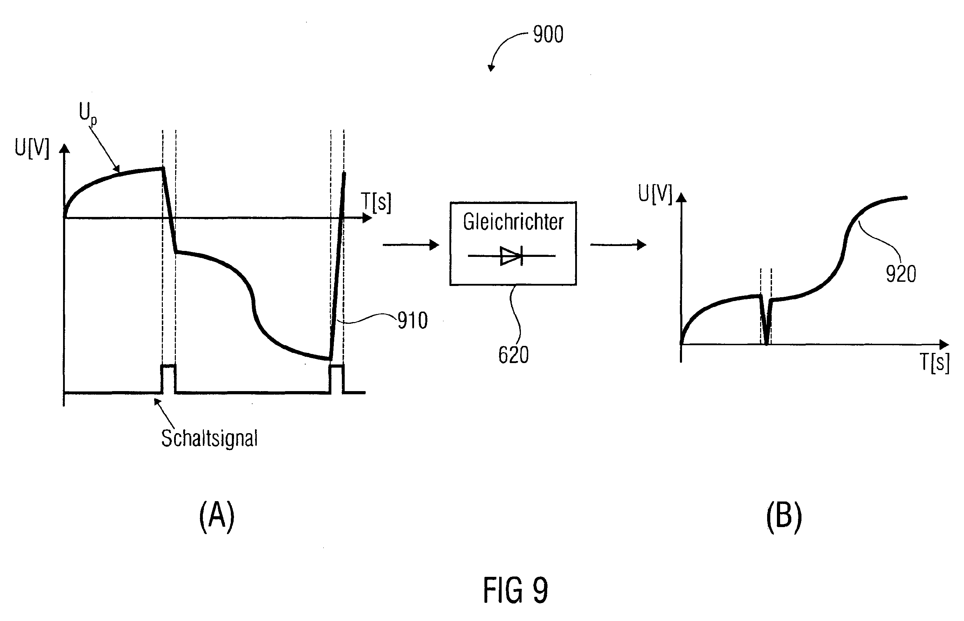

Passend dazu zeigen Figuren 9a und 9b Spannungspegel 900 bei sinusförmiger Anregung am Energiegenerator. Dabei ist in Fig. 9a die Spannung 910 des Piezo-Elements dargestellt. Die Spannung des Piezo-Elements steigt bis zu einem Maximum an, dann wird eine Spule zugeschaltet, bis die Spannung den invertierten Maximalwert erreicht. Danach er-kennt man wieder die nun betragsmäßig erhöhte Signalform. Passend dazu zeigt Fig. 9b die gleichgerichtete Spannung 920 aus Fig. 9a. Dabei ist der Gleichrichter zur Vereinfachung als Ideal angenommen.

Sobald die Maximalspannung am Piezo-Element unter dem Einfluss des hochfrequenten Schwingkreises invertiert ist, wird die Spule wieder vom Schwingkreis getrennt. Dies hat jedoch keine Auswirkung auf die mechanische Schwingung des Piezo-Elements, das seine Schwingung ungestört beibehält. Die Piezo-Spannung wird, wie in Fig. 9a dargestellt, nach unten fortgesetzt. Es ergibt sich eine Verstärkung der Wechselspannung. Auch nach der Gleichrichtung ergibt sich (wie in Fig. 9b) gezeigt, eine betragsmäßig größere Spannung. Dadurch wird auch die Zeitdauer erhöht, in der die gleichgerichtete Spannung diejenige am Energiespeicher übersteigt. Somit kann ein wesentlich größerer Energieanteil an den Speicher weitergegeben werden.

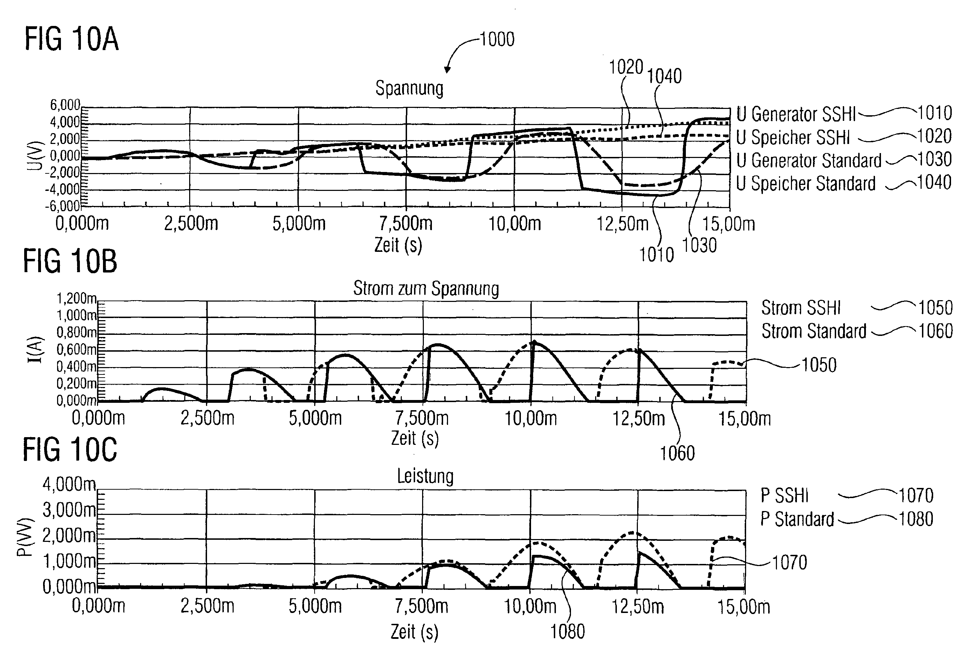

Fig. 10 zeigt dazu eine Simulation 1000 des Ladevorgangs eines Kondensators (Speicher) mit Hilfe des SSHI-Schaltung im Vergleich zu einer Standard-Schaltung. Fig. 10a zeigt dabei Spannungsverläufe 1010, 1020, 1030, 1040 am Generator und am Kondensator (Speicher). Passend dazu zeigt Fig. 10b den Stromfluss 1050, 1060 vom Generator zum Kondensator. Zusätzlich ist in Fig. 10c die Leistung 1070, 1080 dargestellt.

Die in Fig. 10 dargestellten Simulationsergebnisse zeigen den Ladevorgang der SSHI-Schaltung im Vergleich zu dem der Standardschaltung aus Fig. 6. Man erkennt, dass die übertragene Energie im Fall der SSHI-Schaltung mehr als doppelt so groß ist, wie die Energie im Standard-Fall.

Die durch SSHI erzielbare Effizienzsteigerung ist also offensichtlich. Die Schwierigkeit bei der Realisierung der SSHI-Schaltung besteht jedoch darin, Maximum und Minimum der Generatorspannung exakt zu bestimmen, um daraus die Schaltvorgänge zu takten. Das Generatorsignal selbst kann für diesen Zweck nur schwer genutzt werden, da es durch die SSHI-Schaltung in nicht nachvollziehbarer Weise verändert wird und die Information über die Lage der Spitzenwerte verloren geht. Ebenso versagen wegen der verrauschten Spannungspegel die bekannten Peak-Detektor-Schaltungen (Spitzenwert-Detektor-Schaltung).

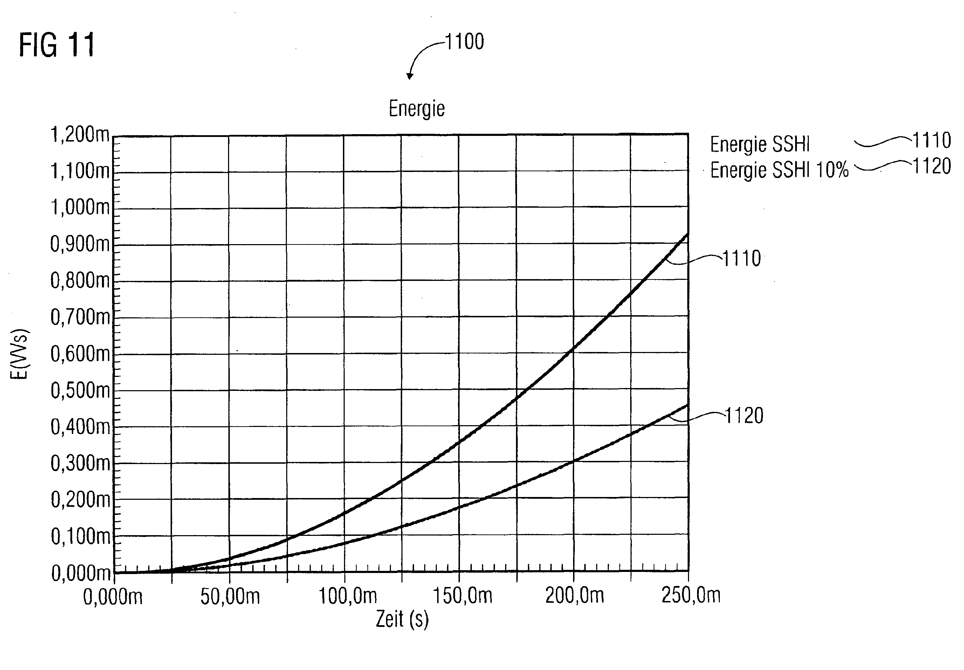

Die Abweichung des SSHI-Schaltpunktes von den Spitzenwerten der Generatorspannung beeinflusst jedoch in empfindlicher Weise die mit SSHI erzielte Spannungsverstärkung. Fig. 11 zeigt die Energieausnutzung 1100 bei optimalem Schaltzeitpunkt 1110 und bei Verschiebung 1120 desselben um 10% einer Periode der Anregungsfrequenz. In Fig. 11 ist auf der Abszisse die Aufladungszeit in ms aufgetragen, auf der Ordinate die während dieser Zeit gespeicherte Energie in mW/s.

Die erste Kurve 1110 gilt für die SSHI-Schaltung mit optimalen Schaltpunkten, die zweite Kurve 1120 für eine Verschiebung der Schaltpunkte um 10% der Periode der anregenden Frequenz. Man erkennt, dass bereits nach 250ms (rechtes Ende der Abszisse) im optimalen Schaltpunkt eine Energie von ca. 0,9mW/s gegenüber 0,45mW/s im verschobenen Schaltpunkt entstanden sind. Damit ergibt sich bei der eingestellten Verschiebung genau eine Halbierung der Energie gegenüber dem optimalen Fall aus.

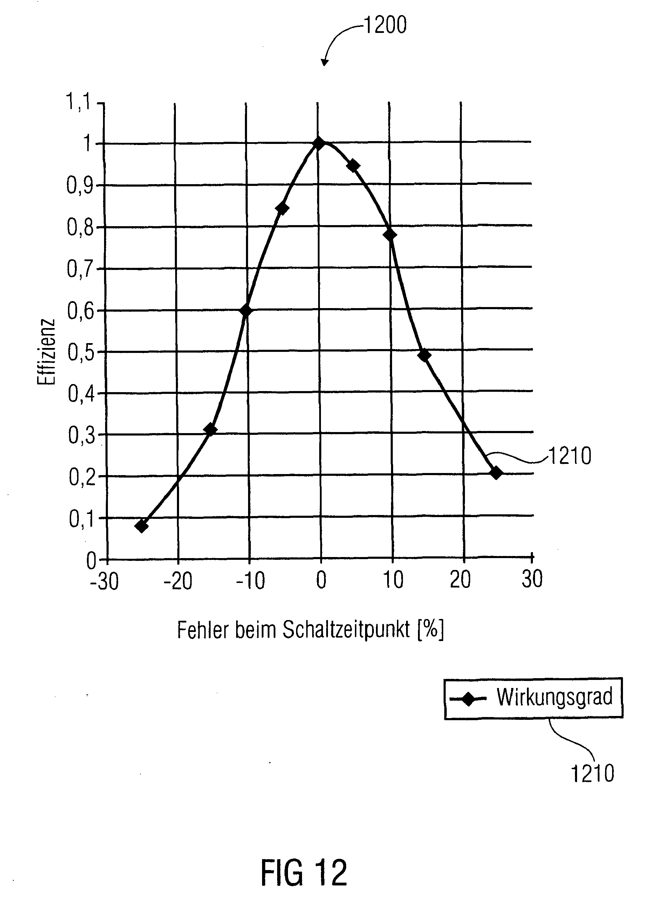

Zusätzlich zeigt Fig. 12 die Abhängigkeit 1200 der Effizienz der SSHI-Schaltung vom Schaltzeitpunkt. Der erzielte Wirkungsgrad ist in Relation zu demjenigen des optimalen Zeitpunkts angegeben. Auf der x-Achse ist die Abweichung in Prozent bezogen auf die Periodendauer der Generatorfrequenz aufgetragen.

In Fig. 12 ist der Graph des funktionalen Zusammenhangs zwischen Wirkungsgrad und Verschiebung dargestellt. Die markierten "Messwerte" wurden durch numerischer Simulation gewonnen.

Die Aufgabe der vorliegenden Erfindung ist es, eine verbesserte Vorrichtung zur Erhöhung einer Ausgangsspannung eines Energiegenerators zu schaffen, die es ermöglicht, einen hohen Wirkungsgrad zu erreichen.

Diese Aufgabe wird durch eine Vorrichtung gemäß Anspruch 1 und ein Verfahren gemäß Anspruch 14 gelöst.

Ein Ausführungsbeispiel gemäß der Erfindung schafft eine Vorrichtung zur Erhöhung einer Ausgangsspannung eines Energiegenerators. Die Vorrichtung umfasst einen ersten Energiegenerator, ein komplementäres Bauelement, ein Schaltmodul, einen zweiten Energiegenerator und einen Gleichrichter. Der erste Energiegenerator ist ausgelegt, um eine erste Generatorausgangsspannung zu erzeugen. Das komplementäre Bauelement ist in Abhängigkeit von einer elektrischen Eigenschaft des ersten Energiegenerators ein induktives Bauelement oder ein kapazitives Bauelement. Das Schaltmodul ist ausgelegt, um das komplementäre Bauelement mit dem ersten Energiegenerator parallel zu schalten, um eine modifizierte erste Generatorausgangsspannung zu erhalten. Des Weiteren ist der zweite Energiegenerator ausgelegt, um eine zweite Generatorausgangsspannung zu erzeugen. Die erste Generatorausgangsspannung und die zweite Generatorausgangsspannung stehen zueinander in einem definierten Verhältnis. Zusätzlich ist das Schaltmodul ausgelegt, um das komplementäre Bauelement basierend auf der zweiten Generatorausgangsspannung mit dem ersten Energiegenerator parallel zu schalten. Der Gleichrichter ist ausgelegt, um die modifizierte erste Generatorausgangsspannung gleichzurichten, um die erhöhte Ausgangsspannung zu erhalten und bereitzustellen.

Die Erhöhung der Ausgangsspannung und damit die Erhöhung des Wirkungsgrads ist maßgeblich von den Schaltzeitpunkten des Schaltmoduls abhängig. Diese Schaltzeitpunkte können nur schwer aus der ersten Generatorausgangsspannung des ersten Energiegenerators gewonnen werden, da diese Ausgangsspannung durch das Zuschalten des komplementären Bauelements und die nachfolgende Last verändert wird. Ausführungsbeispiele gemäß der Erfindung basieren auf dem Kerngedanken, dass ein zweiter Energiegenerator eine zweite Generatorausgangsspannung liefert, die im Vergleich zur ersten Generatorausgangsspannung unbelastet ist. Diese unbelastete Generatorausgangsspannung wird vom Schaltmodul verwendet, um die Schaltzeitpunkte zum Parallelschalten des komplementären Bauelements und zum Aufheben der Parallelschaltung zu bestimmen. Da die erste Generatorausgangsspannung und die zweite Generatorausgangsspannung in einem definierten Verhältnis zueinander stehen, kann das Schaltmodul über die zweite Generatorausgangsspannung einen Zeitpunkt, zu dem die erste Generatorausgangsspannung beispielsweise ein Maximum oder ein Minimum einnimmt, sehr genau bestimmen. Dadurch kann verlässlich eine möglichst hohe erhöhte Ausgangsspannung erreicht werden und der Wirkungsgrad deutlich verbessert werden als bei bekannten Konzepten.

US 6 522 048 B1 offenbart eine Vorrichtung zur Erhöhung einer Ausgangsspannung eines ersten Piezogenerators PEG1 (Hauptenergiegenerator) bei dem mit Hilfe eines zweiten Piezogenerators PEG2 (Hilfsenergiegenerator) die Maxima oder Minimawerte erkannt werden. Es werden also die Maxima/Minima des ersten Piezogenerators mit Hilfe der Maxima/Minima des zweiten Piezogenerators, welcher die gleiche Phasenlage hat, erkannt.

Einige Ausführungsbeispiele gemäß der Erfindung umfassen einen Energiespeicher, dem die erhöhte Ausgangsspannung zur Verfügung gestellt wird. Durch die erhöhte Ausgangsspannung kann der Energiespeicher wesentlich mehr Energie speichern und der Wirkungsgrad kann deutlich gesteigert werden.

Einige weitere Ausführungsbeispiele gemäß der Erfindung beziehen sich auf ein Sensorsystem, das eine Energieerzeugungsvorrichtung, einen Sensor und optional eine drahtlose Datenübertragungsvorrichtung umfasst. Die Energieerzeugungsvorrichtung arbeitet nach dem beschriebenen Konzept und versorgt den Sensor und die drahtlose Datenübertragungsvorrichtung mit Energie. Das Sensorsystem kann daher energieautark Messgrößen bestimmen und optional auch drahtlos an einen Empfänger übermitteln.

Einige Ausführungsbeispiele gemäß der Erfindung beziehen sich auf ein Verfahren zur Erhöhung einer Ausgangsspannung eines Energiegenerators. Das Verfahren umfasst ein Erzeugen einer ersten Generatorausgangsspannung durch einen ersten Energiegenerator, ein Erzeugen einer zweiten Generatorausgangsspannung durch einen zweiten Energiegenerator und ein Parallelschalten eines komplementären Elements mit dem ersten Energiegenerator. Dabei stehen die erste Generatorausgangsspannung und die zweite Generatorausgangsspannung in einem definierten Verhältnis zueinander. Das komplementäre Bauelement ist in Abhängigkeit von einer elektrischen Eigenschaft des ersten Energiegenerators ein induktives Bauelement oder ein kapazitives Bauelement. Das komplementäre Element und der erste Energiegenerator werden parallel geschaltet, um eine modifizierte erste Generatorausgangsspannung zu erhalten. Das komplementäre Element und der erste Energie-generator werden basierend auf der zweiten Generatorausgangsspannung parallel geschaltet. Des Weiteren umfasst das Verfahren ein Gleichrichten der modifizierten ersten Generatorausgangsspannung, um die erhöhte Ausgangsspannung zu erhalten, und umfasst ein Bereitstellen der erhöhten Ausgangsspannung.

Ausführungsbeispiele gemäß der Erfindung werden nachfolgend Bezug nehmend auf die beiliegenden Figuren näher erläutert. Es zeigen:
- Fig. 1: ein Blockschaltbild einer Vorrichtung zur Erhöhung einer Ausgangsspannung eines Energiegenerators;
- Fig. 2: ein Blockschaltbild einer Energieerzeugungsvorrichtung;
- Fig. 3: ein Blockschaltbild eines Sensorsystems;
- Fig. 4: ein Flussdiagramm eines Verfahrens zur Erhöhung einer Ausgangsspannung eines Energiegenerators;
- Fig. 5: eine schematische Darstellung einer energieautarken Zustandsüberwachung;
- Fig. 6: ein Blockschaltbild einer bekannten Energieerzeugungsvorrichtung;
- Fig. 7a: eine schematische Darstellung eines Verlaufs einer Generatorspannung und einer Spannung an einem Speicher;
- Fig. 7b: eine schematische Darstellung eines Verlaufs eines Stroms zu einem Speicher passend zur Fig. 7a;
- Fig. 8: eine schematische Darstellung einer bekannten Vorrichtung zur Erhöhung einer Ausgangsspannung eines Energiegenerators;
- Fig. 9a: eine schematische Darstellung einer Spannung am Energiegenerator der Vorrichtung in Fig. 8;
- Fig. 9b: eine schematische Darstellung der gleichgerichteten Spannung passend zur Fig. 9a;
- Fig. 10a: Simulationsergebnisse von Spannungsverläufen am Generator und am Speicher;
- Fig. 10b: Simulationsergebnisse eines Stromflusses vom Generator zum Speicher;
- Fig. 10c: Simulationsergebnisse der Leistung;
- Fig. 11: eine Simulation der Energieausnutzung für optimale und verschobene Schaltzeitpunkt; und
- Fig. 12: eine Simulation der Abhängigkeit der Effizienz des SSHI-Schaltung vom Schaltzeitpunkt.

Im Folgenden werden teilweise für Objekte und Funktionseinheiten, die gleiche oder ähnliche funktionelle Eigenschaften aufweisen, gleiche Bezugszeichen verwendet.

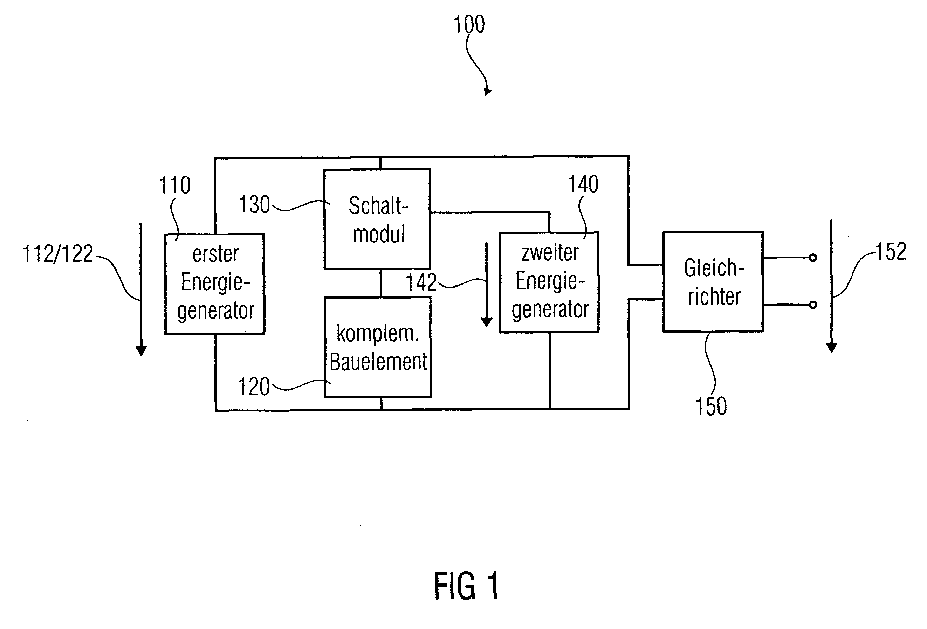

Fig. 1 zeigt ein Blockschaltbild einer Vorrichtung 100 zur Erhöhung einer Ausgangsspannung 152 eines Energiegenerators entsprechend einem Ausführungsbeispiel gemäß der Erfindung. Die Vorrichtung 100 umfasst einen ersten Energiegenerator 110, ein komplementäres Bauelement 120, ein Schaltmodul 130, einen zweiten Energiegenerator 140 und einen Gleichrichter 150. Der erste Energiegenerator 110 erzeugt eine erste Generatorausgangsspannung 112 und der zweite Energiegenerator 140 erzeugt eine zweite Generatorausgangsspannung 142. Die erste Generatorausgangsspannung 112 und die zweite Generatorausgangsspannung 142 stehen zueinander in einem definierten Verhältnis. Das komplementäre Bauelement 120 ist in Abhängigkeit von einer elektrischen Eigenschaft des ersten Energiegenerators 110 ein induktives Bauelement oder ein kapazitives Bauelement. Das Schaltmodul 130 schaltet das komplementäre Bauelement 120 mit dem ersten Energiegenerator 110 parallel, um eine modifizierte erste Generatorausgangsspannung 122 zu erhalten. Das Schaltmodul 130 schaltet das komplementäre Bauelement 120 mit dem ersten Energiegenerator 110 basierend auf der zweiten Generatorausgangsspannung 142 parallel. Der Gleichrichter 150 richtet die modifizierte erste Generatorausgangsspannung 122 gleich, um die erhöhte Ausgangsspannung 152 zu erhalten und bereitzustellen.

Fig. 1 zeigt eine mögliche Realisierung einer Vorrichtung 100 zur Erhöhung einer Ausgangsspannung, bei der der erste Energiegenerator 110 mit einem ersten Anschluss mit dem Schaltmodul 130 und dem Gleichrichter 150 verbunden ist und mit einem zweiten Anschluss mit dem komplementären Bauelement 120, dem zweiten Energiegenerator 140 und dem Gleichrichter 150 verbunden ist. Das komplementäre Bauelement 120 ist mit einem ersten Anschluss mit dem Schaltmodul 130 und mit einem zweiten Anschluss mit dem ersten Energiegenerator 120, dem zweiten Energiegenerator 140 und dem Gleichrichter 150 verbunden. Das Schaltmodul 130 ist mit einem ersten Anschluss mit dem ersten Energiegenerator 110 und dem Gleichrichter 150 verbunden, mit einem zweiten Anschluss mit dem komplementären Bauelement 120 verbunden und mit einem dritten Anschluss mit dem zweiten Energiegenerator 140 verbunden. Des Weiteren ist der zweite Energiegenerator 140 mit einem ersten Anschluss mit dem Schaltmodul 130 und mit einem zweiten Anschluss mit dem ersten Energiegenerator 110, dem komplementären Bauelement 120 und dem Gleichrichter 150 verbunden.

Da die erste Generatorausgangsspannung 112 und die zweite Generatorausgangsspannung in einem definierten Verhältnis zueinander stehen, können durch die Steuerung des Schaltmoduls 130 mit der zweiten unbelasteten Generatorausgangsspannung 142 die Schaltzeitpunkte zum Parallelschalten des komplementären Bauelements 120 und dem Aufheben der Parallelschaltung sehr genau bestimmt werden, um zuverlässig eine möglichst hohe erhöhte Ausgangsspannung zu erhalten und dadurch den Wirkungsgrad deutlich zu erhöhen. Die Erhöhung der Ausgangsspannung bezieht sich dabei beispielsweise auf eine Erhöhung im Vergleich zu der ersten Generatorausgangsspannung, wie Sie ohne eine Parallelschaltung des komplementären Bauelements 120 vorliegen würde. Der Wirkungsgrad ist zum Beispiel definiert als Verhältnis zwischen erzeugter Energie und verwertbarer Energie und daher maßgeblich abhängig von der Größe der Ausgangsspannung 152. Je höher die Ausgangsspannung 152 ist, umso höher ist die verwertbare Energie und umso höher ist der Wirkungsgrad.

Der erste Energiegenerator 110 und der zweite Energiegenerator 140 können zum Beispiel Vibrationswandler, Schockwandler oder Schaltwandler sein. Diese basieren auf einer Umwandlung von Bewegungsenergie in elektrische Energie. Da der erste Energiegenerator 110 und der zweite Energiegenerator 140 zur Energieerzeugung der selben Bewegung ausgesetzt sind, stehen die erste Generatorausgangsspannung 112 und die zweite Generatorausgangsspannung 122 in einem definierten Verhältnis zueinander. Werden die beiden Energiegeneratoren beispielsweise durch eine sinusförmige Bewegung angeregt, werden die erste Generatorausgangsspannung 112 und die zweite Generatorausgangsspannung 142 die selbe Frequenz aufweisen. Sie unterscheiden sich dann beispielsweise nur durch einen konstanten Phasenversatz und/oder ein konstantes Amplitudenverhältnis. Allgemein können der erste Energiegenerator 110 und der zweite Energiegenerator 140 jegliche Art von Energiegeneratoren sein, die eine zeitlich veränderliche Ausgangsspannung mit einem definierten Verhältnis zueinander liefern. Es reicht für ein definiertes Verhältnis beispielsweise aus, dass die erste Generatorausgangsspannung 112 und die zweite Generatorausgangsspannung eine konstante Phasenlage zueinander haben.

Die Art des komplementären Bauelements 120 ist abhängig von einer elektrischen Eigenschaft des ersten Energiegenerators 110. Ist der erste Energiegenerator 110 beispielsweise ein piezo-elektrischer oder kapazitiver Energiegenerator, so weist dieser ausgeprägtere kapazitive elektrische Eigenschaften als induktive Eigenschaften auf. Daher ist das komplementäre Bauelement 120 dann ein induktives Bauelement, wie zum Beispiel eine Spule. Ist der erste Energiegenerator 110 hingegen beispielsweise ein induktiver Energiegenerator, so weist dieser ausgeprägtere induktive elektrische Eigenschaften als kapazitive Eigenschaften auf. Das komplementäre Bauelement 120 ist dann ein kapazitives Bauelement, wie beispielsweise ein Kondensator. Zu den induktiven Energiegeneratoren zählen beispielsweise auch magnetostriktive Energiegeneratoren.

Der erste Energiegerator 110 und der zweite Energiegenerator 140 können, wie beispielsweise in Fig. 1 gezeigt, voneinander getrennte Energiegeneratoren sein. Alternativ können der erste und der zweite Energiegenerator beispielsweise einen gemeinsamen Schwingkörper, im kapazitiven Fall ein gemeinsames piezo-elektrisches Element oder im induktiven Fall einen gemeinsamen Permanentmagneten verwenden. Zum Beispiel können auf einem piezo-elektrischen Element Elektroden für den ersten Energiegenerator 110 und für den zweiten Energiegenerator 140 angeordnet sein.

Um eine möglichst hohe erhöhte Ausgangsspannung 152 zu erhalten, kann es beispielsweise wichtig sein, das komplementäre Bauelement 120 mit dem ersten Energiegenerator 110 genau dann parallel zu schalten, wenn die erste Generatorausgangsspannung 112 ein Maximum aufweist, und genau dann die Parallelschaltung aufzuheben, wenn die erste Generatorausgangsspannung 112 ein Minimum aufweist. Alternativ kann die Parallelschaltung auch erfolgen, wenn die erste Generatorausgangsspannung 112 ein Minimum aufweist, und die Aufhebung der Parallelschaltung erfolgen, wenn die erste Generatorausgangsspannung 112 ein Maximum aufweist. Da die erste Generatorausgangsspannung 112 und die zweite Generatorausgangsspannung 142 in einem definierten Verhältnis zueinander stehen, ist bekannt, welchen Wert die zweite Generatorausgangsspannung 142 annimmt, wenn die erste Generatorausgangsspannung 112 ein zum Beispiel Minimum und/oder ein Maximum aufweist. In anderen Worten, die zweite Generatorausgangsspannung 142 nimmt beispielsweise einen ersten Referenzwert ein, wenn die erste Generatorausgangsspannung 112 ein Maximum aufweist, und nimmt einen zweiten Referenzwert ein, wenn die erste Generatorausgangsspannung 112 ein Minimum aufweist.

Das Schaltmodul 130 kann dann z.B. das komplementäre Bauelement 120 mit dem ersten Energiegenerator 110 parallel schalten, wenn die zweite Generatorausgangsspannung 142 den ersten Referenzwert aufweist, und die Parallelschaltung wieder aufheben, wenn die zweite Generatorausgangsspannung 142 den zweiten Referenzwert aufweist. Alternativ kann dies wie zuvor beschrieben auch umgekehrt erfolgen.

Die Genauigkeit, mit der die Schaltzeitpunkt des Schaltmoduls 130 in diesem Beispiel mit den Minima und/oder Maxima der ersten Generatorausgangsspannung 112 übereinstimmen, ist also nunmehr davon abhängig, wie genau die Zeitpunkte bestimmt werden können, an denen die zweite Generatorausgangsspannung 142 die Referenzwerte einnimmt. Da die zweite Generatorausgangsspannung 142 im Vergleich zur ersten Generatorausgangsspannung 112 ein sauberes unbelastetes Signal darstellt, kann dies wesentlich einfacher und genauer erfolgen als eine direkte Bestimmung über die erste Generatorausgangsspannung 112 und der Wirkungsgrad kann deutlich verbessert werden.

Sind beispielsweise der erste Energiegenerator 110 und der zweite Energiegenerator 140 beide piezo-elektrische Energiegeneratoren oder beide induktive Energiegeneratoren, erreicht die erste Generatorausgangsspannung 112 ein Maximum/Minimum, wenn die zweite Generatorausgangsspannung 122 ein Maximum/Minimum erreicht. Der erste und zweite Referenzwert entsprechen dann dem Maximum und Minimum der zweiten Generatorausgangsspannung 142.

Alternativ kann beispielsweise der erste Energiegenerator 110 ein piezo-elektrischer Energiegenerator und der zweite Energiegenerator 140 ein induktiver Energiegenerator oder umgekehrt sein. Da der piezo-elektrische Energiegenerator eine Nullspannung liefert, wenn die Generatorausgangsspannung des induktiven Energiegenerators ein Minimum oder ein Maximum aufweist, und da der induktive Energiegenerator eine Nullspannung liefert, wenn die Generatorausgangsspannung des piezo-elektrischen Energiegenerators ein Minimum oder ein Maximum aufweist, sind der erste und der zweite Referenzwert der zweiten Generatorausgangsspannung 142 in beiden Fällen Null. Diese Nullspannung kann durch das Schaltmodul 130 sehr einfach und genau detektiert werden und kann dadurch die Parallelschaltung und die Aufhebung der Parallelschaltung sehr exakt vornehmen, wenn die erste Generatorausgangsspannung 112 ein Maximum oder Minimum aufweist. Die Nulldurchgänge können beispielsweise durch einen Nullpunkts-Komperator bestimmt werden.

Ein Maximum, Minimum, eine Nullspannung oder allgemein der erste und der zweite Referenzwert des zweiten Generatorausgangssignals 142 und/oder die Zeitpunkte, zu denen diese Werte erreicht werden, können mit einer Toleranz bestimmt werden, die durch die Architektur des Schaltmoduls 130 oder jenes Teils des Schaltmoduls 130, der die Referenzwerte und/oder Zeitpunkte bestimmt ist.

Alternativ zu dem in Fig. 1 gezeigten Aufbau können beispielsweise das Schaltmodul 130 und das komplementäre Bauelement 120 in umgekehrter Reihenfolge angeordnet sein.

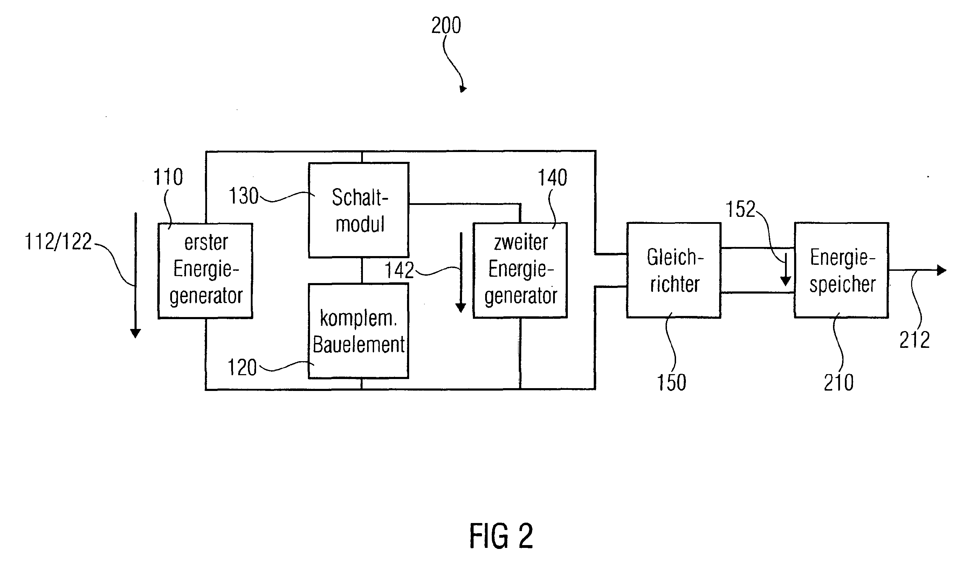

Fig. 2 zeigt eine Energieerzeugungsvorrichtung 200 entsprechend einem Ausführungsbeispiel gemäß der Erfindung. Die Energieerzeugungsvorrichtung 200 umfasst eine Vorrichtung zur Erhöhung einer Ausgangsspannung 152 eines Energiegenerators, wie sie beispielsweise in Fig. 1 gezeigt ist, verbunden mit einem Energiespeicher 210. Der Energiespeicher 210 speichert Energie basierend auf der erhöhten Ausgangsspannung 152 und stellt die gespeicherte Energie 212 bereit.

Durch die Verwendung des beschriebenen Konzepts kann der Energiespeicher 210 wesentlich effizienter gefüllt werden, da eine höhere Ausgangsspannung 152 zur Verfügung steht.

Der Energiespeicher 210 kann beispielsweise ein Kondensator oder eine Batterie/Akkumulator sein.

Die Energieerzeugungsvorrichtung (Wandler) erfüllt beispielsweise die Aufgabe, einen Wandler bereitzustellen, der die verfügbare Energie möglichst vollständig nutzt, um externe Verbraucher mit einer zuverlässigen Betriebsspannung (mit Energie) zu versorgen.

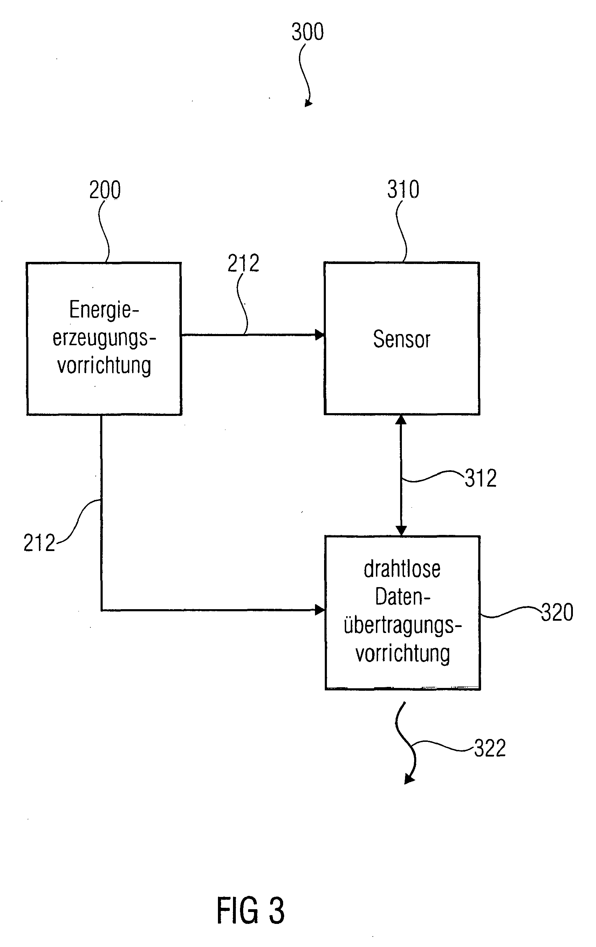

Fig. 3 zeigt ein Blockschaltbild eines Sensorsystems 300 entsprechend einem Ausführungsbeispiel gemäß der Erfindung. Das Sensorsystem 300 umfasst eine Energieerzeugungsvorrichtung 200, wie sie beispielsweise in Fig. 2 gezeigt ist, einen Sensor 310 und eine optionale drahtlose Datenübertragungsvorrichtung 320. Die Energieerzeugungsvorrichtung 200 versorgt den Sensor 310 und die optionale drahtlose Datenübertragungsvorrichtung 320 mit Energie 212. Der Sensor 310 bestimmt eine Messgröße 312 und stellt diese beispielsweise zum Speichern, zum drahtgebundenen Übertragen an einen Empfänger oder der optionalen drahtlosen Datenübertragungsvorrichtung 320 zur Verfügung.

Die optionale drahtlose Datenübertragungsvorrichtung 320 kann dann Sensordaten, die auf der bestimmten Messgröße basieren, drahtlos an einen Empfänger übertragen. Die drahtlose Datenübertragungsvorrichtung 320 kann beispielsweise eine Funkdatenübertragungsvorrichtung, eine optische Datenübertragungsvorrichtung oder eine Ultraschalldatenübertragungsvorrichtung sein.

Bei dem Sensor 310 kann es sich beispielsweise um einen Temperatur-, Druck-, Beschleunigungs-, Ladezustands- und/oder Feuchtigkeits-Sensor handeln.

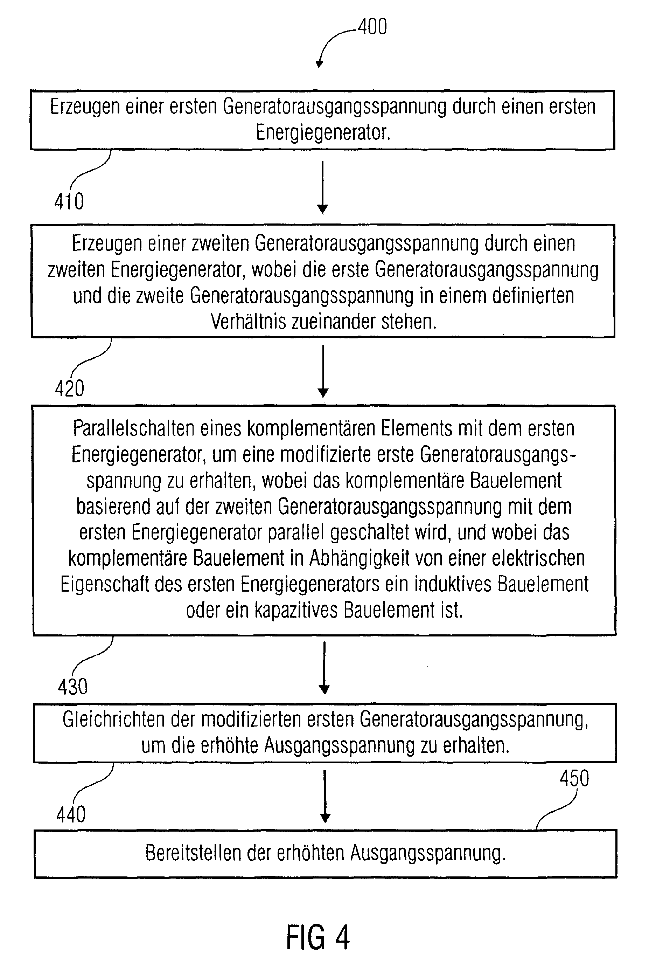

Fig. 4 zeigt ein Flussdiagramm eines Verfahrens 400 zur Erhöhung einer Ausgangsspannung eines Energiegenerators entsprechend einem Ausführungsbeispiel gemäß der Erfindung. Das Verfahren umfasst ein Erzeugen 410 einer ersten Generatorausgangsspannung durch einen ersten Energiegenerator, ein Erzeugen 420 einer zweiten Generatorausgangsspannung durch einen zweiten Energiegenerator und ein Parallelschalten 430 eines komplementären Bauelements mit dem ersten Energiegenerator. Die erste Generatorausgangsspannung und die zweite Generatorausgangsspannung stehen zueinander in einem definierten Verhältnis. Das komplementäre Bauelement wird mit dem ersten Energiegenerator parallel geschaltet 430, um eine modifizierte erste Generatorausgangsspannung zu erhalten. Die Parallelschaltung 430 des komplementäre Bauelements mit dem ersten Energiegenerator basiert auf der zweiten Generatorausgangsspannung. Des Weiteren umfasst das Verfahren 400 ein Gleichrichten 440 der modifizierten ersten Generatorausgangsspannung, um die erhöhte Ausgangsspannung zu erhalten, und ein Bereitstellen 450 der erhöhten Ausgangsspannung.

Das Verfahren 400 kann durch weitere Verfahrensschritte entsprechend dem zuvor beschriebenen Konzept erweitert werden. Aspekte, die zuvor für Vorrichtungen beschrieben wurden, können dementsprechend auch durch das Verfahren realisiert werden.

Das Verfahren 400 kann beispielsweise als Computerprogramm oder Computerprogrammprodukt zum Ablauf auf einem Computer oder Mikrocontroller realisiert werden.

Einige Ausführungsbeispiele gemäß der Erfindung beziehen sich auf einen leistungsgesteigerten Harvester (Energieerzeuger, Energiewandler) auf Vibrationsbasis mit wandlergesteuerter Laderegelung und/oder einen leistungsoptimierten Mikro-Energie-Harvester auf Vibrationsbasis mit neuartiger, wandlergesteuerter Ladeelektronik.

Zur Verbesserung des Wirkungsgrades eines Energy Harvesters kann die gesamte Kette vom Generator, über die Ladelektronik bis zum Speicher optimiert werden. Bei der Ladeelektronik ist sowohl die Funktionsweise als auch der Eigenverbrauch von Bedeutung.

Das beschriebene Konzept greift unter anderem die Grundlagen der piezoelektrischen und induktiven Vibrationswandler auf und liefert weitere Beiträge zur Steigerung des Gesamtwirkungsgrades der Energiegeneratoren.

Die Voraussetzungen zur Realisierung eines neuartigen Wandlertyps, der auch als Hybrid- oder Kombinationsgenerator bezeichnet wird und der aus zwei unabhängigen, signaltechnisch jedoch miteinander gekoppelten Generatoren besteht, werden geschaffen. Es wird eine wandlergesteurte elektronische Schaltung vorgestellt, welche den gespeicherten Energieertrag maximiert. Die vorliegenden Generator- und Schaltungskomponenten können zu einem neuen Gesamtsystem integriert werden.

Die Erfindung erlaubt es, einen autarken Mikro-Energie-Wandler zu erstellen, der gegenüber der in Fig. 6 bekannten Standard-Lösung einen maximierten Wirkungsgrad und damit möglichst geringe Verluste aufweist.
Bezugspunkt für die Angabe des Wirkungsgrads ist beispielsweise die vom Generator abgegebene Energie. Der Generator ist im Fall eines piezoelektrischen Wandlers hochohmig (50 - 100kΩ), beim Induktionswandler niederohmig (1-5kΩ). Der Innenwiderstand des Speichers (Kondensator oder Batterie) verändert sich dagegen im Verlauf des Ladevorgangs kontinuierlich. Deshalb ist eine statische Anpassung zwischen Generator und Speicher grundsätzlich nicht möglich. Der Einbau einer aktiven elektronischen Anpassungsschaltung ist wegen ihres Eigenverbrauchs nicht immer sinnvoll (schlechte Bilanz).

Insgesamt wird die Qualität der Anpassung derart verbessert, dass nahezu sämtliche Energie, die vom Generator angeliefert wird, im Speicher abgelegt werden kann.

Der Ansatzpunkt, um dieses Ziel zu erreichen, besteht darin, die oben genannte Forderung bezüglich der Spannungspegel am Generator und Speicher zu umgehen, sodass ab einer bestimmten Schwelle, die nur bauteilabhängig ist, der Energiefluss zwischen beiden kontinuierlich und lückenlos abläuft. Dies füllt die Ladelücken, die bei bekannten Standard-Schaltungen vorhanden sind, auf und sorgt für die Verringerung der Verluste. Da es sich auch hier um eine aktive Schaltung handelt, ist es zum Beispiel sinnvoll der Energieeigenverbrauch der Schaltung mit in die Energiebilanz einzubeziehen. Über alles betrachtet kann trotzdem mit dem oben genannten hohen Wirkungsgrad gerechnet werden. Die Minimierung des Eigenverbrauchs der aktiven Schaltung kann neben anderen bei der Umsetzung des beschriebenen Konzepts erfolgen.

Die Entwicklung einer elektronischen Schaltung, die in der Lage ist, die mit dem Stand der Technik einhergehenden Einschränkungen außer Kraft zu setzen, besitzt hohe Bedeutung sowohl in wissenschaftlich-technischer als auch wirtschaftlicher Hinsicht.

Es liegt ein neuartiger Mikro-Energie-Generator vor, der gegenüber dem Stand der Technik einen wesentlich gesteigerten Wirkungsgrad besitzt. Untersuchungen mit den am Markt verfügbaren Generatoren haben gezeigt, dass bei den bekannten Standardlösungen ein Wirkungsgrad von maximal. 30-40% erreicht wird. Durch das beschriebene neue Konzept kann ein Wirkungsgrad im Bereich von 80% erreicht werden. Wirkungsgrade in dieser Größenordnung sind aus der Literatur nicht bekannt. Ansätze zur Weiterentwicklung in diese Richtung sind von mehreren Stellen aufgezeigt (siehe z.B. "D. Maurath, M. Ortmanns, Y. Manoli: Generic Scheme for Designing an Adaptive Load Input Matching Charge Pump; Proceedings of PowerMEMS 2008+ microEMS 2008, Sendai, Japan, November 9-12, (2008), pp. 149-152", "T. Hehn, C. Peters, F. Hagedorn, M. Ortmanns, Y. Manoli: A CMOS integrated interface for piezoelectric generators; Proceedings of PowerMEMS 2008+ microEMS2008, Sendai, Japan, November 9-12, (2008), pp. 457-460" und "Y. Hu, H. Xue, T. Hu, H. Hu: Nonlinear Interface Between the Piezoelectric Harvesting Structure and the Modulating Circuit of an Energy Harvester with a Real Storage Battery; ieee transactions on ultrasonics, ferroelectrics, and frequency control, vol. 55, no. 1, (2008), pp 148-160"). Eine konkrete Realisierungsmöglichkeit, wie durch die vorliegende Erfindung gezeigt, ist jedoch nicht bekannt.

Zum Beispiel erschließen sich dem Thema "Condition Monitoring" (Zustandsüberwachung) dadurch eine Vielzahl neuer und wichtiger Anwendungen, insbesondere bei schwer zugänglichen industriellen Maschinen und Aggregaten, in Fahrzeugen, in der Umweltdatenerfassung, in der Medizintechnik u.a.. Insgesamt kann bei den überwachten Komponenten und Produkten die Qualität, ihre Lebensdauer und Betriebssicherheit bei weniger Ausfallzeiten und geringeren Wartungs- und Betriebskosten und damit ihr wirtschaftlicher und auch ideeller Wert gesteigert werden.

Einige Ausführungsbeispiele gemäß der Erfindung beziehen sich auf eine SSHI-Schaltung oder ein SSHI-Verfahren. Um den Störparameter "Abweichung des SSHI-Schaltpunktes" auszuschalten, wird deshalb zum Beispiel ein modifiziertes SSHI-Verfahren realisiert, das darauf basiert, neben dem Piezo-Element als Primärgenerator einen Sekundärgenerator einzusetzen, der völlig unabhängig und unbeeinflusst von der SSHI-Schaltung ist, aber derselben mechanischen Anregung ausgesetzt ist. Der Sekundärgenerator hat lediglich die Aufgabe, die synchronen SSHI-Schaltsignale beizusteuern. Beide Generatoren können vom gleichen Typ sein, aber z.B. unterschiedliche Größe besitzen. Ebenso können Generatoren eingesetzt werden, die auf unterschiedlichen physikalischen Wirkprinzipien beruhen. Interessant ist zum Beispiel auch ein Hybridsensor mit Kombination aus piezoelektrischem und induktivem Generator.

Dabei soll ist die Aufgabenverteilung beider Generatoren, sodass der Primärgenerator (erster Energiegenerator) ein Piezo-System ist, das der eigentlichen Energiegewinnung dient. Die Ladeelektronik mit SSHI-Schaltung und der elektrische Energiespeicher sind nachgeschaltet.

Der Sekundärgenerator (zweiter Energiegenerator) ist ein Induktionssystem, das im Leerlauf (unbelastet) arbeitet und die Schaltsignale für die SSHI-Schaltung bereitstellt. Diese Kombination besitzt den Vorteil, dass die Extrema der Primärgeneratorspannung (erste Generatorausgangsspannung) stets und genau mit Nulldurchgängen der Sekundärgeneratorspannung (zweite Generatorausgangsspannung) korreliert sind. Das Induktionssystem arbeitet abgesehen von einem hochohmigen Nullpunkts-Komparator praktisch unbelastet, so dass sich keine lastabhängigen Phasenverschiebungen ergeben.

Zwanglos kann die Aufgabenverteilung der beiden Generatoren auch umgekehrt erfolgen. Die Kombination piezoelektrischer/induktiver Generator kann günstig sein, da bei dynamischer Anregung die Spannungsextrema des Piezo-Generators am Ort der maximalen Auslenkung zu finden sind, dort wo die Umkehrpunkte der Bewegung liegen, diejenigen des induktiven Generators aber am Ort der maximalen Geschwindigkeit im Nulldurchgang der Bewegung. Dies kann für schaltungstechnische Bestimmung der SSHI-Schaltpunkte günstig sein (Nullspannungsdetektor).

Um einen kompakten Aufbau des Generators zu gewährleisten, ist es möglich den piezoelektrischen Wandler sowohl als Energiegenerator als auch als Träger für das Induktive Schwingungssystem zu verwenden.

Ein Kombigenerator bestehend aus zwei induktiven Generatoren kann ebenfalls realisiert werden, bei dem der Sekundärgenerator aus einer leerlaufenden zusätzlichen Spule, die um die Primärspule gewickelt ist, besteht.

Ebenso kann der Kombigenerator aus zwei piezoelektrischen Strukturen bestehen, die auf demselben Substrat aufgebracht sind. In dieser Ausführung kann maximale Übereinstimmung zwischen den Signalen beider Strukturen erzielt werden.

Bei den beiden letztgenannten Lösungen ist allerdings nicht die a priori Phasenverschiebung von 90° wie bei dem Hybridsensor gegeben.

Die oben gemachten Ausführungen gelten beispielhaft für das SSHI-Verfahren. Dieses wird bei piezoelektrischen Primärgeneratoren eingesetzt. Bei induktiven Primärgeneratoren wird das SSHC-Verfahren verwendet. Dabei wird der notwendige LC-Schwingkreis durch Parallelschaltung eines Kondensators zur Generatorspule realisiert. Unter diesen Bedingungen gelten die für das SSHI-Verfahren gemachten Aussagen auch für das SSHC-Verfahren.

Die modifizierten Wandler können mit einer Interfaceschaltung oder Schnittstellenschaltung (Teil des Schaltmoduls) integriert werden, die die vom zweiten Generator gelieferten Signale auswertet und damit den primären Generator zu den richtigen Zeitpunkten schaltet.

Die Erfindung betrifft unter anderem den Energiegenerator. Sie ist in der vorliegenden Beschreibung hauptsächlich auf piezoelektrische (siehe z.B. "E. Hymon: FEM gestützter Entwurf piezoelektrischer Energie-Generatoren, VDC TZ, 2007, St. Georgen, Germany") und induktive (siehe z.B. "D. Spreemann, B. Folkmer, Y. Manoli: A Market Research Overview of Inductive Vibration Transducers, Proc. Energieautarke Sensorik - 5. GMM-Workshop 2008, Nov. 12-13, Düsseldorf, 2008 und "D. Spreemann: Anwendungsorientierte Auslegung elektromagnetischer Vibrationswandler, VDC TZ, 2007, St. Georgen, Germany") Vibrationswandler ausgerichtet, lässt sich aber auf weitere Wirkprinzipien übertragen.

Allgemein wird darauf hingewiesen, dass abhängig von den Gegebenheiten, das erfindungsgemäße Schema auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt, kann die Erfindung somit als ein Computerprogramm mit einem Programmcode zur Durchführung des Verfahrens realisiert werden, wenn das Computerprogrammprodukt auf einem Computer abläuft.

## Patentansprüche

1. Vorrichtung (100) zur Erhöhung einer Ausgangsspannung (152) eines Energiegenerators mit folgenden Merkmalen:
einem ersten Energiegenerator (110), der ausgelegt ist, um eine erste Generatorausgangsspannung (112) zu erzeugen;
ein komplementäres Bauelement (120), wobei das komplementäre Bauelement (120) in Abhängigkeit von einer elektrischen Eigenschaft des ersten Energiegenerators (110) ein induktives Bauelement oder ein kapazitives Bauelement ist;
einem Schaltmodul (130), das ausgelegt ist, um das komplementäre Bauelement (120) mit dem ersten Energiegenerator (110) parallel zu schalten, um eine modifizierte erste Generatorausgangsspannung (122) zu erhalten;
einem zweiten Energiegenerator (140), der ausgebildet ist, um eine zweite Generatorausgangsspannung (142) zu erzeugen, wobei die erste Generatorausgangsspannung (112) und die zweite Generatorausgangsspannung (142) durch eine konstante Phasenlage in einem definierten Verhältnis zueinander stehen, und wobei das Schaltmodul (130) ausgelegt ist, um das komplementäre Bauelement (120) basierend auf der zweiten Generatorausgangsspannung (142) mit dem ersten Energiegenerator (110) parallel zu schalten,
wobei die zweite Generatorausgangsspannung (142) einen durch das definierte Verhältnis festgelegten ersten Referenzwert aufweist, wenn die erste Generatorausgangsspannung (112) ein Maximum aufweist, und wobei die zweite Generatorausgangsspannung (142) einen durch das definierte Verhältnis festgelegten zweiten Referenzwert aufweist, wenn die erste Generatorausgangsspannung (112) ein Minimum aufweist,
wobei der erste Energiegenerator (110) ein piezo-elektrischer oder kapzitiver Energiegenerator und der zweite Energiegenerator (140) ein induktiver Energiegenerator ist oder der zweite Energiegenerator (110) ein piezo-elektrischer oder kapzitiver Energiegenerator und der erste Energiegenerator (140) ein induktiver Energiegenerator ist, wobei der erste und der zweite Referenzwert der zweiten Generatorausgangsspannung (142) gleich Null sind,
wobei der induktive Energiegenerator bei dynamischer Anregung die Spannungsextrema am Ort der maximalen Geschwindigkeit im Nulldurchgang der Bewegung aufweist; und
einem Gleichrichter (150), der ausgelegt ist, um die modifizierte erste Generatorausgangsspannung (122) gleichzurichten, um die erhöhte Ausgangsspannung (152) zu erhalten und bereitzustellen.

2. Vorrichtung gemäß Anspruch 1, wobei der erste Energiegenerator (110) und der zweite Energiegenerator (140) die erste Generatorausgangsspannung (112) und die zweite Generatorausgangsspannung (142) basierend auf einer Umwandlung von Bewegungsenergie in elektrische Energie erzeugen, wobei die Bewegungsenergie für den ersten Energiegenerator (110) und den zweiten Energiegenerator (140) durch einen Bewegungsablauf bereitgestellt wird, wobei der Bewegungsablauf für den ersten Energiegenerator (110) und den zweiten Energiegenerator (140) gleich ist.

3. Vorrichtung gemäß Anspruch 1 oder 2, wobei der erste Energiegenerator (110) ein piezo-elektrischer oder kapazitiver Energiegenerator mit dominierender kapazitiver elektrischer Eigenschaft ist und daher das komplementäre Bauelement (120) ein induktives Bauelement ist.

4. Vorrichtung gemäß Anspruch 1 oder 2, wobei der erste Energiegenerator (110) ein induktiver Energiegenerator mit dominierender induktiver elektrischer Eigenschaft ist und daher das komplementäre Bauelement (120) ein kapazitives Bauelement ist.

5. Vorrichtung gemäß einem der Ansprüche 1 bis 4, wobei das Schaltmodul (130) ausgelegt ist, um das komplementäre Bauelement (120) mit dem ersten Energiegenerator (110) parallel zu schalten, wenn die zweite Generatorausgangsspannung (142) den ersten Referenzwert aufweist, und ausgelegt ist, um die Parallelschaltung des komplementären Bauelements (120) mit dem ersten Energiegenerator (110) aufzuheben, wenn die zweite Generatorausgangsspannung (142) den zweiten Referenzwert aufweist.

6. Vorrichtung gemäß einem der Ansprüche 1 bis 4, wobei das Schaltmodul (130) ausgelegt ist, um das komplementäre Bauelement (120) mit dem ersten Energiegenerator (110) parallel zu schalten, wenn die zweite Generatorausgangsspannung (142) den zweiten Referenzwert aufweist, und ausgelegt ist, um die Parallelschaltung des komplementären Bauelements (120) mit dem ersten Energiegenerator (110) aufzuheben, wenn die zweite Generatorausgangsspannung (142) den ersten Referenzwert aufweist.

7. Energieerzeugungsvorrichtung (200) mit folgenden Merkmalen:
einer Vorrichtung (100) zur Erhöhung einer Ausgangsspannung (152) eines Energiegenerators gemäß einem der Ansprüche 1 bis 6; und
einem Energiespeicher (210), der ausgelegt ist, um basierend auf der erhöhten Ausgangsspannung (152) Energie zu speichern und die gespeicherte Energie (212) bereitzustellen.

8. Sensorsystem (300) mit folgenden Merkmalen:
einem Sensor (310), der ausgelegt ist, um eine Messgröße (312) zu bestimmen und bereitzustellen; und
einer Energieerzeugungsvorrichtung (200) gemäß Anspruch 7, wobei die Energieerzeugungsvorrichtung (200) ausgelegt ist, um den Sensor (310) mit Energie (212) zu versorgen.

9. Sensorsystem gemäß Anspruch 8, das eine drahtlose Datenübertragungsvorrichtung (320) aufweist, die ausgelegt ist, um Sensordaten (322) drahtlos an einen Empfänger zu übertragen, wobei die Sensordaten (322) auf der bestimmten Messgröße (312) basieren.

10. Verfahren (400) zur Erhöhung einer Ausgangsspannung eines Energiegenerators, mit folgenden Schritten:
Erzeugen (410) einer ersten Generatorausgangsspannung durch einen ersten Energiegenerator;
Erzeugen (420) einer zweiten Generatorausgangsspannung durch einen zweiten Energiegenerator, wobei die erste Generatorausgangsspannung und die zweite Generatorausgangsspannung durch eine konstante Phasenlage in einem definierten Verhältnis zueinander stehen,
wobei die zweite Generatorausgangsspannung (142) einen durch das definierte Verhältnis festgelegten ersten Referenzwert aufweist, wenn die erste Generatorausgangsspannung (112) ein Maximum aufweist, und wobei die zweite Generatorausgangsspannung (142) einen durch das definierte Verhältnis festgelegten zweiten Referenzwert aufweist, wenn die erste Generatorausgangsspannung (112) ein Minimum aufweist,
wobei der erste Energiegenerator (110) ein piezo-elektrischer oder kapzitiver Energiegenerator und der zweite Energiegenerator (140) ein induktiver Energiegenerator ist oder der zweite Energiegenerator (110) ein piezo-elektrischer oder kapzitiver Energiegenerator und der erste Energiegenerator (140) ein induktiver Energiegenerator ist, wobei der erste und der zweite Referenzwert der zweiten Generatorausgangsspannung (142) gleich Null sind,
wobei der induktive Energiegenerator bei dynamischer Anregung die Spannungsextrema am Ort der maximalen Geschwindigkeit im Nulldurchgang der Bewegung aufweist;
Parallelschalten (430) eines komplementären Elements mit dem ersten Energiegenerator, um eine modifizierte erste Generatorausgangsspannung zu erhalten, wobei das komplementäre Bauelement basierend auf der zweiten Generatorausgangsspannung mit dem ersten Energiegenerator parallel geschaltet wird, und wobei das komplementäre Bauelement in Abhängigkeit von einer elektrischen Eigenschaft des ersten Energiegenerators ein induktives Bauelement oder ein kapazitives Bauelement ist;
Gleichrichten (440) der modifizierten ersten Generatorausgangsspannung, um die erhöhte Ausgangsspannung zu erhalten; und
Bereitstellen (450) der erhöhten Ausgangsspannung.

11. Computerprogramm mit einem Programmcode zur Durchführung des Verfahrensgemäß Anspruch 10, wenn das Computerprogramm auf einem Computer oder Mikrocontroller abläuft.

## Claims

1. Apparatus (100) for increasing an output voltage (152) of an energy generator, comprising:
a first energy generator (110) implemented to generate a first generator output voltage (112);
a complimentary device (120), wherein, in dependence on an electric characteristic of the first energy generator (110), the complimentary device (120) is an inductive device or a capacitive device;
a switching module (130) implemented to connect the complimentary device (120) in parallel to the first energy generator (110) to obtain a modified first generator output voltage (122);
a second energy generator (140) implemented to generate a second generator output voltage (142), wherein the first generator output voltage (112) and the second generator output voltage (142) are in a defined ratio to one another due to a constant phase position, and wherein the switching module (130) is implemented to connect the complimentary device (120) in parallel to the first energy generator (110) based on the second generator output voltage (142),
wherein the second generator output voltage (142) has a first reference value determined by the defined ratio when the first generator output voltage (112) is at a maximum, and wherein the second generator output voltage (142) has a second reference value determined by the defined ratio when the first generator output voltage (112) is at a minimum,
wherein the first energy generator (110) is a piezoelectric or capacitive energy generator and the second energy generator (140) is an inductive energy generator, or the second energy generator (110) is a piezoelectric or capacitive energy generator and the first energy generator (140) is an inductive energy generator, wherein the first and second reference values of the second generator output voltage (142) equal zero,
wherein, during dynamic excitation, the inductive energy generator comprises the voltage extremes at the location of maximum speed in zero-crossing of motion; and
a rectifier (150) implemented to rectify the modified first generator output voltage (122) to obtain and to provide the increased output voltage (152).

2. Apparatus according to claim 1, wherein the first energy generator (110) and the second energy generator (140) generate the first generator output voltage (112) and the second generator output voltage (142) based on a conversion of energy of motion into electric energy, wherein the energy of motion is provided to the first energy generator (110) and the second energy generator (140) by a motion sequence, wherein the motion sequence is the same for the first energy generator (110) and the second energy generator (140).

3. Apparatus according to claim 1 or 2, wherein the first energy generator (110) is a piezoelectric or capacitive energy generator having a dominating capacitive electric characteristic and hence the complimentary device (120) is an inductive device.

4. Apparatus according to claim 1 or 2, wherein the first energy generator (110) is an inductive energy generator having a dominating inductive electric characteristic and hence the complimentary device (120) is a capacitive device.

5. Apparatus according to one of claims 1 to 4, wherein the switching module (130) is implemented to connect the complimentary device (120) in parallel to the first energy generator (110) when the second generator output voltage (142) has the first reference value, and is implemented to cancel the parallel connection of the complimentary device (120) to the first energy generator (110) when the second generator output voltage (142) has the second reference value.

6. Apparatus according to one of claims 1 to 4, wherein the switching module (130) is implemented to connect the complimentary device (120) in parallel to the first energy generator (110) when the second generator output voltage (142) has the second reference value, and is implemented to cancel the parallel connection of the complimentary device (120) to the first energy generator (110) when the second generator output voltage (142) has the first reference value.

7. Energy generation apparatus (200) comprising:
an apparatus (100) for increasing an output voltage (152) of an energy generator according to one of claims 1 to 6; and
an energy storage (210) implemented to store energy based on the increased output voltage (152) and to provide the stored energy (212).

8. Sensor system (300) comprising:
a sensor (310) implemented to determine and to provide a measurement quantity (312); and
an energy generation apparatus (200) according to claim 7, wherein the energy generation apparatus (200) is implemented to supply the sensor (310) with energy (212).

9. Sensor system according to claim 8 comprising a wireless data transmission apparatus (320) implemented to transmit sensor data (322) to a receiver in a wireless manner, wherein the sensor data (322) are based on the determined measurement quantity (312).

10. Method (400) for increasing an output voltage of an energy generator, comprising:
generating (410) a first generator output voltage by a first energy generator;
generating (420) a second generator output voltage by a second energy generator, wherein the first generator output voltage and the second generator output voltage are in a defined ratio to each other due to a constant phase position,
wherein the second generator output voltage (142) has a first reference value determined by the defined ratio when the first generator output voltage (112) is at a maximum, and wherein the second generator output voltage (142) has a second reference value determined by the defined ratio when the first generator output voltage (112) is at a minimum,
wherein the first energy generator (110) is a piezoelectric or capacitive energy generator and the second energy generator (140) is an inductive energy generator, or the second energy generator (110) is a piezoelectric or capacitive energy generator and the first energy generator (140) is an inductive energy generator, wherein the first and second reference values of the second generator output voltage (142) equal zero,
wherein, during dynamic excitation, the inductive energy generator comprises the voltage extremes at the location of maximum speed in zero-crossing of motion;
connecting in parallel (430) a complimentary element to the first energy generator to obtain a modified first generator output voltage, wherein the complimentary device is connected in parallel to the first energy generator based on the second generator output voltage, and wherein, in dependence on an electric characteristic of the first energy generator, the complimentary device is an inductive device or a capacitive device;
rectifying (440) the modified first generator output voltage to obtain the increased output voltage; and
providing (450) the increased output voltage.

11. Computer program having a program code for performing the method according to claim 10 when the computer program runs on a computer or microcontroller.

## Revendications

1. Dispositif (100) permettant d'augmenter une tension de sortie (152) d'un générateur d'énergie, aux caractéristiques suivantes:
un premier générateur d'énergie (110), qui est conçu pour générer une première tension de sortie de générateur (112);
un composant complémentaire (120), le composant complémentaire (120) étant, en fonction d'une propriété électrique du premier générateur d'énergie (110), un composant inductif ou un composant capacitif;
un module de commutation (130) qui est conçu pour connecter le composant complémentaire (120) en parallèle avec le premier générateur d'énergie (110), pour obtenir une première tension de sortie de générateur modifiée (122);
un deuxième générateur d'énergie (140), qui est conçu pour générer une deuxième tension de sortie de générateur (142), la première tension de sortie de générateur (112) et la deuxième tension de sortie de générateur (142) présentant entre elles, par une position de phase constante, un rapport défini, et le module de commutation (130) étant conçu pour commuter le composant complémentaire (120) sur base de la deuxième tension de sortie de générateur (142) en parallèle avec le premier générateur d'énergie (110),
dans lequel la deuxième tension de sortie de générateur (142) présente une première valeur de référence établie par le rapport défini lorsque la première tension de sortie de générateur (112) présente un maximum, et dans lequel la deuxième tension de sortie de générateur (142) présente une deuxième valeur de référence établie par le rapport défini lorsque la première tension de sortie de générateur (112) présente un minimum,
dans lequel le premier générateur d'énergie (110) est un générateur d'énergie piézoélectrique ou capacitif et le deuxième générateur d'énergie (140) est un générateur d'énergie inductif ou le deuxième générateur d'énergie (110) est un générateur d'énergie piézoélectrique ou capacitif et le premier générateur d'énergie (140) est un générateur d'énergie inductif, la première et la deuxième valeur de référence de la deuxième tension de sortie de générateur (142) étant égales à zéro,
dans lequel le générateur d'énergie inductif présente, en cas d'excitation dynamique, les extrêmes de tension à l'endroit de la vitesse maximale au passage par zéro du déplacement; et
un redresseur (150) qui est conçu pour redresser la première tension de sortie de générateur modifiée (122), pour obtenir et mettre à disposition la tension de sortie augmentée (152).

2. Dispositif selon la revendication 1, dans lequel le premier générateur d'énergie (110) et le deuxième générateur d'énergie (140) génèrent la première tension de sortie de générateur (112) et la deuxième tension de sortie de générateur (142) sur base d'une conversion d'énergie de déplacement en énergie électrique, où l'énergie de déplacement est mise à disposition du premier générateur d'énergie (110) et du deuxième générateur d'énergie (140) par une évolution de déplacement, l'évolution de déplacement étant identique pour le premier générateur d'énergie (110) et le deuxième générateur d'énergie (140).

3. Dispositif selon la revendication 1 ou 2, dans lequel le premier générateur d'énergie (110) est un générateur d'énergie piézoélectrique ou capacitif à propriété électrique capacitive dominante et, de ce fait, le composant complémentaire (120) est un composant inductif.

4. Dispositif selon la revendication 1 ou 2, dans lequel le premier générateur d'énergie (110) est un générateur d'énergie inductif à propriété électrique inductive dominante et, de ce fait, le composant complémentaire (120) est un composant capacitif.

5. Dispositif selon l'une des revendications 1 à 4, dans lequel le module de commutation (130) est conçu pour connecter le composant complémentaire (120) en parallèle avec le premier générateur d'énergie (110) lorsque la deuxième tension de sortie de générateur (142) présente la première valeur de référence, et est conçu pour annuler la connexion en parallèle du composant complémentaire (120) avec le premier générateur d'énergie (110) lorsque la deuxième tension de sortie de générateur (142) présente la deuxième valeur de référence.

6. Dispositif selon l'une des revendications 1 à 4, dans lequel le module de commutation (130) est conçu pour connecter le composant complémentaire (120) en parallèle avec le premier générateur d'énergie (110) lorsque la deuxième tension de sortie de générateur (142) présente la deuxième valeur de référence, et est conçu pour annuler la connexion en parallèle du composant complémentaire (120) avec le premier générateur d'énergie (110) lorsque la deuxième tension de sortie de générateur (142) présente la première valeur de référence.

7. Dispositif de génération d'énergie (200), aux caractéristiques suivantes:
un dispositif (100) permettant d'augmenter une tension de sortie (152) d'un générateur d'énergie selon l'une des revendications 1 à 6; et
un accumulateur d'énergie (210), qui est conçu pour accumuler, sur base de la tension de sortie augmentée (152), de l'énergie et pour mettre à disposition l'énergie accumulée (212).

8. Système de capteur (300), aux caractéristiques suivantes:
un capteur (310) qui est conçu pour déterminer et mettre à disposition une grandeur de mesure (312); et
un dispositif de génération d'énergie (200) selon la revendication 7, dans lequel le dispositif de génération d'énergie (200) est conçu pour alimenter le capteur (310) en énergie (212).

9. Système de capteur selon la revendication 8, présentant un dispositif de transmission de données sans fil (320) qui est conçu pour transmettre des données de capteur (322) sans fil à un récepteur, les données de capteur (322) étant basées sur la grandeur de mesure déterminée (312).

10. Procédé (400) permettant d'augmenter une tension de sortie d'un générateur d'énergie, aux étapes suivantes consistant à:
générer (410) une première tension de sortie de générateur par un premier générateur d'énergie;
générer (420) une deuxième tension de sortie de générateur par un deuxième générateur d'énergie, la première tension de sortie de générateur et la deuxième tension de sortie de générateur présentant entre elles, par une position de phase constante, un rapport défini,
dans lequel la deuxième tension de sortie de générateur (142) présente une première valeur de référence établie par le rapport défini lorsque la première tension de sortie de générateur (112) présente un maximum, et dans lequel la deuxième tension de sortie de générateur (142) présente une deuxième valeur de référence établie par le rapport défini lorsque la première tension de sortie de générateur (112) présente un minimum,
dans lequel le premier générateur d'énergie (110) est un générateur d'énergie piézoélectrique ou capacitif et le deuxième générateur d'énergie (140) est un générateur d'énergie inductif ou le deuxième générateur d'énergie (110) est un générateur d'énergie piézoélectrique ou capacitif et le premier générateur d'énergie (140) est un générateur d'énergie inductif, la première et la deuxième valeur de référence de la deuxième tension de sortie de générateur (142) étant égales à zéro,
dans lequel le générateur d'énergie inductif présente, en cas d'excitation dynamique, les extrêmes de tension à l'endroit de la vitesse maximale au passage par zéro du déplacement;
commuter en parallèle (430) un composant complémentaire avec le premier générateur d'énergie, pour obtenir une première tension de sortie de générateur modifiée, le composant complémentaire étant connecté, sur base de la deuxième tension de sortie de générateur, en parallèle avec le premier générateur d'énergie, et le composant complémentaire étant, en fonction d'une propriété électrique du premier générateur d'énergie, un composant inductif ou un composant capacitif;
redresser (440) la première tension de sortie de générateur modifiée, pour obtenir la tension de sortie augmentée; et
mettre à disposition (450) la tension de sortie augmentée.

11. Programme d'ordinateur avec un code de programme pour réaliser le procédé selon la revendication 10, lorsque le programme d'ordinateur est exécuté sur un ordinateur ou microcontrôleur.
